# EUROPÄISCHE PATENTSCHRIFT

(11) **EP 3 619 917 B1**
(45) Veröffentlichungstag und Bekanntmachung des Hinweises auf die Patenterteilung: **23.08.2023**
(21) Anmeldenummer: 18719440.2
(22) Anmeldetag: 11.04.2018
(51) Int. Cl.: H04Q 9/00, H04W 52/02

(54) **BATTERIEBETRIEBENER SMARTMETERING-ZÄHLER**
BATTERY-OPERATED SMART METERING COUNTER
COMPTEUR DE MESURE INTELLIGENTE FONCTIONNANT SUR BATTERIE

(30) Priorität: 05.05.2017 DE 102017004365
(43) Veröffentlichungstag der Anmeldung: 11.03.2020
(73) Patentinhaber: Diehl Metering Systems GmbH, 90451 Nürnberg (DE)
(72) Erfinder: PETKOV, Hristo, 90425 Nürnberg (DE); LAUTENBACHER, Thomas, 91058 Erlangen (DE); KAUPPERT, Thomas, 90455 Nürnberg (DE); GOTTSCHALK, Klaus, 90610 Winkelhaid (DE)
(74) Vertreter: Diehl Patentabteilung
(86) Internationale Anmeldenummer: PCT/EP2018/000192
(87) Internationale Veröffentlichungsnummer: WO 2018/202325

(56) Entgegenhaltungen:
- WO-A1-2017/187175
- DE-B3-102007 061 325
- JP-A- H1 155 176
- US-A1- 2016 366 649
- US-A1- 2017 013 561
- US-A1- 2017 164 288

## Beschreibung

Die Erfindung betrifft ein Verfahren und eine Einrichtung zum Batteriebetrieb von Smartmetering-Zählern gemäß dem jeweiligen Oberbegriff der unabhängigen Patentansprüche.

Die US 2016/0366649 beschreibt ein Datenübertragungsverfahren, welches im Rahmen von sog. Energy-Harvesting z. B. bei Solarzellen zum Einsatz kommt. Hierbei ist eine Datenübertragungseinheit mit einer Energieversorgungseinrichtung ausgestattet, die der Umwelt z. B. der Solarzelle Energie entzieht und diese für die Datenübertragung von Datenpaketen nutzt. Die Energieversorgungseinrichtung kann auch eine kleine Batterie (Knopfzelle) umfassen. Falls über die Energieversorgungseinrichtung zu wenig Energie aus der Umwelt gezogen werden kann oder über die Batterie zu wenig Energie zur Verfügung steht, werden gemäß diesem Verfahren Datenpakete nicht gesendet oder die Sendeleistung reduziert.

Die JP H11 55176 A offenbart ein batteriebetriebenes Smart Meter, welches in Abhängigkeit der gemessenen Kapazität der Batterie mittels eines Ein-Ausschalters in einen Energiesparmodus A oder Energiesparmodus B geschaltet wird. Im Energiesparmodus A wird die Sende-Empfangseinheit lediglich für einige Stunden pro Tag eingeschaltet. Im Energiesparmodus B wir die Stromversorgung zur Empfangseinheit und zum Modulator/Demodulator unterbrochen. Lediglich ein Smart Meter-seitiger Ruf an eine zentrale Einheit bleibt möglich.

Aus der US 2017/0164288 A1 sind ein Verfahren sowie eine Einrichtung zum Kommunikationsmanagement einer z. B. einen Verbrauchssensor umfassenden Gateway Einrichtung bekannt. Die Gateway Einrichtung verfügt über eine 3G Mobilfunk-Sende/Empfangseinrichtung mit Batterie. Bei einem niedrigen Ladungszustand der Batterie wird in der Gateway Einrichtung nach Erhalt einer entsprechenden Nachricht von einer Service Plattform zur Energieeinsparung die Aktivität oder der Betrieb der Gateway Einrichtung reduziert.

Beim Smartmetering, wie es etwa in der DE 1 01 52 554 B4 beschrieben ist, wird angestrebt, jede Verbrauchsstelle für leitungsgebundene Energieträger wie Strom, Gas, Wasser oder Fernwärme mit einem Zähler für von einem Messwerk verbrauchsabhängig generierte Signale auszustatten, und mit einem Funkmodul zu drahtloser Nahbereichs-Paketübermittlung des aktuell akkumulierten, digitalisierten Zählerstandes über eines der lizenzfrei zugänglichen ISM-Frequenzbänder an einen Konzentrator. Der empfängt und speichert die von verschiedenen im Empfangsbereich betriebenen Zählern vergleichsweise häufig empfangenen, durch Zähler-Adressen individualisierten Pakete (auch als Telegramme bezeichnet) und führt u.U. eine Vorverarbeitung beispielsweise zur Daten-Plausibilitätskontrolle durch. Über Weitbereichs-Datenfunk, etwa in einem WLAN- oder Mobilfunk-Standard, werden die in Konzentratoren zwischengespeicherten Daten, vergleichsweise selten, an ein Netz-Headend übermittelt, etwa an die Abrechnungs- oder die Betriebsverwaltungs-Zentrale eines Energieversorgungsunternehmens für diesen Energieträger in diesem Versorgungsgebiet.

Aus der DE 10 2007 061 325 B3 ist ein Verfahren zum Betreiben eines elektronischen Verbrauchmessgeräts bekannt, bei dem als Energiequelle eine Batterie verwendet wird und bei dem gespeicherte Daten von Zeit zu Zeit periodisch an einen Datensammler per Funk übertragen werden. Hierbei wird von vornherein ausgewählt, von welchen Datentypen die Daten übertragen werden sollen und ausgehend von einem begrenzten Zeitraum sowie ausgehend von der in diesem Zeitraum zur Verfügung stehenden elektrischen Energie der Datenquelle berechnet wird, nach welchem Zeitintervall die Daten gesendet werden, um die zur Verfügung stehende elektrische Energie der Energiequelle maximal auszunutzen.

Der für den Verbraucher unzugängliche Zähler ist mit einer Longlife-Batterie ausgestattet, die einen Batteriewechsel (gegebenenfalls zusammen mit einer Messwerk-Neukalibrierung) erst nach einer Betriebszeit von mindestens zwölf Jahren erforderlich machen soll. Aus logistischen, messtechnischen und Kosten-Gründen werden zum Ablauf dieser vorgegebenen Betriebszeitspanne im Versorgungsgebiet alle Zähler oder wenigstens deren Batterien praktisch gleichzeitig ausgetauscht, auch wenn einige der Batterien momentan noch hinreichende Kapazität für weiteren Betrieb aufweisen sollten. Wenn aber andererseits bei einem der im Versorgungsgebiet betriebenen Zähler dessen Batterie vorzeitig erschöpft ist, verursacht der außerplanmäßige Austausch, zumal für die kurze Restzeitspanne bis zum erneuten da regulären Austausch mit Ablauf der Betriebszeitspanne im gesamten Versorgungsgebiet, einen erheblichen personellen und finanziellen Mehraufwand.

Angesichts derartiger Gegebenheiten liegt vorliegender Erfindung die technische Problemstellung zugrunde, das Erfordernis eines außerplanmäßigen, vorzeitigen Batterietausches im Smartmetering-Zähler zu vermeiden.

Diese Aufgabe ist gemäß den in den unabhängigen Patentansprüchen angegebenen Kombinationen der wesentlichen Merkmale dadurch gelöst, dass die noch verfügbare, restliche Betriebsdauer einer vorzeitig zu erschöpfen drohenden Longlife- Batterie durch deren gezielte Entlastung bis (wenigstens) zum Ablauf der regulären Betriebszeitspanne verlängert wird, indem abhängig von der Restkapazität der Batterie im Sinne einer Verlängerung der verbliebenen Betriebszeitspanne Einfluss genommen wird auf Parameter der Funkverbindung.

Erfindungsgemäß wird bei nach gewisser Betriebsdauer abgesunkener Batteriekapazität die Anzahl der mit dieser Batterie noch übermittelbaren Datenpakete bestimmt, um die Datenpakete in der Restzeitspanne dann mit für Strecken der Restzeitspanne modifiziertem Funk-Parameter, etwa hinsichtlich Datenrate, Wellenform, Takt und / oder Pegel nur noch reduziert, zu übermitteln.

Ein im Zähler arbeitender Detektor ist zum Erfassen des Verhaltens, insbesondere des Verlaufes der Entladekurve, oder wenigstens des momentanen, zumal belastungs- und temperaturabhängigen Zustandes, der Batterie vorgesehen. Ein brauchbares solches Zustands-Kriterium ist die momentane Batteriespannung oder der aktuelle Innenwiderstand der Batterie, gemessen möglichst unter Voll-Last; vorzugsweise im Vergleich zu einem Normverhalten oder Normzustand dieses Batterietypes nach der momentanen Betriebsdauer. Unter Berücksichtigung des bekannten Leistungsverbrauches insbesondere der Messeinrichtung, der Signalverarbeitung und des Funkmodules dieses Zählers wird dann abhängig von der Restkapazität der Batterie auf ausgewählte Funkparameter Einfluss genommen. Dazu kann bestimmt, etwa berechnet oder aus hinterlegten Tabellen entnommen, werden, wie viele Paketsendungen bisheriger Art mit der momentan verbliebenen Batteriekapazität noch möglich sind. Um jedoch die daraus resultierende Betriebsdauer darüber hinaus zu strecken, wird künftig, bis zum regulären Batterietausch mit Ablauf der im System vorgegebenen Betriebszeitspanne, wenigstens ein Funk-Parameter, wie die Sendeleistung des Funkmodules dieses Zählers und / oder sein Sendetakt, entsprechend reduziert.

Insbesondere kann dazu die Anzahl noch möglicher Paketsendungen über den Rest der regulären Betriebszeitspanne gespreizt verteilt werden. Das ergibt für die nach der bisherigen Betriebsdauer noch verbleibende Restzeitspanne einen reduzierten Sendetakt für Paketsendungen von diesem Zähler, die Frequenz dessen Taktgebers für das Aussenden von Datenpaketen wird dafür reduziert. Wenn allerdings dadurch der Empfang von Zählerdaten-Paketen etwa für eine gewünschte Abrechnungsaktualität der Verbrauchsdaten zu selten werden sollte, wird bei hinreichend hoher verbleibender Datenrate über die Restzeitspanne der vorgegebenen Betriebszeitspanne die Sendeleistung reduziert. Auch ein Übergang auf eine Wellenform reduzierter Reichweite ist möglich. Eine Verschlechterung der Empfangsbedingungen seitens des Konzentrators wird, für die Belange der Praxis, durch das wiederholte Aussenden von Datenpaketen des Zählers und wegen mehrerer im Versorgungsgebiet verteilter Konzentratoren hinreichend kompensiert.

Wenn die Funkmodule nicht nur des Konzentrators, sondern auch der Zähler mit einem Transceiver für bidirektionalen Datenfunk ausgestattet sind, kann der Gesamtaufwand über die in den zahlreichen Zählern des Versorgungsgebietes jeweils vorzuhaltende Rechenleistung drastisch reduziert werden, indem die zum Erreichen der Betriebszeitspanne über die Restzeitspanne erforderliche Reduzierung etwa des Sendetaktes der Datenpakete und / oder der Sendeleistung nur bei den Konzentratoren, eventuell sogar nur in der Zentrale, ermittelt wird. Dafür sendet der Zähler, vorzugsweise nicht separat sondern mit dem Datenpaket oder als Anhang zu einem Datenpaket, eine Information über den Momentanzustand seiner Batterie, etwa gekennzeichnet durch die Batteriespannung unter Last, an wenigstens einen der Konzentratoren im Versorgungsgebiet. Dort ist die Datenrate für die systemspezifische Betriebszeitspanne hinterlegt. Der Zähler empfängt vom Konzentrator als Antwort auf die Information über den Batteriezustand eine Angabe über den erforderlichenfalls optimierten künftigen Sende-Parameter, etwa den Sendetakt bei vorgegebener, eventuell reduzierter Sendeleistung - vorzugsweise gleich in Form der kodierten neuen Einstellungen des Sende-Taktgebers und der Sender-Ausgangsleistung bei diesem Zähler mit sonst vorzeitig zur Neige gehender Batteriekapazität.

So ist für diesen Zähler die Restkapazität seiner Batterie mit der Restzeitspanne des Batteriebetriebes bei den anderen, regulär arbeitenden Zählern dieses Versorgungsgebietes abgeglichen, indem abhängig von der Restkapazität der Batterie zum Strecken der Restzeitspanne auf ausgewählte Funkparameter Einfluss genommen wird.

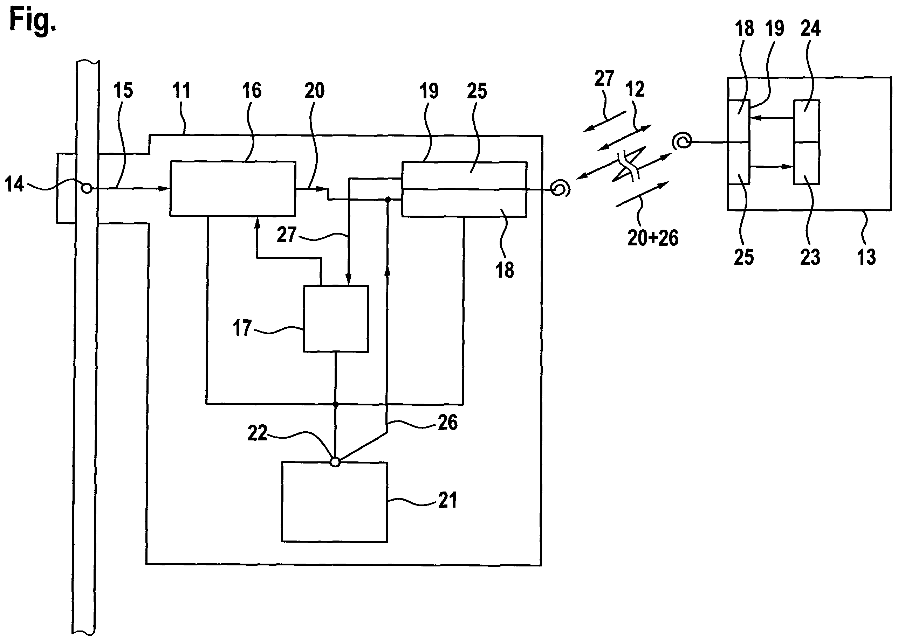

Zusätzliche Alternativen und Weiterbildungen zur erfindungsgemäßen Lösung ergeben sich aus den weiteren Ansprüchen und, auch unter Berücksichtigung von deren Vorteilen, aus nachstehender Beschreibung eines bevorzugten Realisierungsbeispieles zur Erfindung. Die einzige Figur der Zeichnung veranschaulicht, nach Art eines Blockschaltbildes auf das Funktionswesentliche reduziert, das erfindungsgemäße Batteriemanagement eines Smartmetering-Zählers.

Der abstrahiert skizzierte Zähler 11 ist einer von vielen, die in einem Versorgungsgebiet über hier bidirektionale Funkverbindungen 12 mit wenigstens einem Konzentrator 13 kommunizieren. Mittels eines etwa inkremental arbeitenden Sensors 14 in oder an der Zapfleitung eines Energieträgers werden Verbrauchsdaten 15, insbesondere der Durchfluss eines Fluides, erfasst. Sie werden in einer Signalverarbeitung 16 aufbereitet, gegebenenfalls noch digitalisiert, und akkumuliert, bis sie von Zeit zu Zeit, gesteuert über einen Taktgeber 17, mittels des Senders 18 eines Funkmodules 19 als Verbrauchsdaten-Paket 20 an den Empfänger 25 des Funkmodules 19 in wenigstens einem der im Versorgungsgebiet erreichbaren Konzentratoren 13 übermittelt werden.

Der Zähler 11 ist mit einer Primär-Batterie 21 für die Betriebsenergie seiner Funktionskomponenten, also insbesondere für die Signalverarbeitung 16, den Taktgeber 17 und den Funkmodul 19 sowie erforderlichenfalls auch des Sensors 14, ausgestattet. Eine Batterieinformation 26 über den momentanen Ladezustand der Batterie 21 wird von einem Detektor 22 geliefert, der bei diesem Realisierungsbeispiel dafür ausgelegt ist, die aktuelle Batteriespannung unter Voll-Last zu erfassen. Diese Information 26 wird, jedenfalls von Zeit zu Zeit, etwa als Anhang zum Datenpaket 20 an den Empfänger 25 im Konzentrator 13 übermittelt. Wenn dort in einem Spannungs-Vergleicher 23 festgestellt wird, dass beispielsweise bei dieser Batterie 21 die Entladekurve signifikant steiler abfällt, als es batterietypisch ist, wird die verbliebene Batteriekapazität nicht ausreichen, diesen Zähler 11 bis zum regulären Ende der Betriebszeitspanne zu betreiben. Deshalb wird in einem Tabellenspeicher oder in einer Rechenschaltung 24 für die verbliebene Batteriekapazität festgestellt, für wie viele der bisherigen, vom Zähler 11 über Funk übermittelten Datenpakete 20 diese Restkapazität noch ausreicht; und durch welchen über die Signalverarbeitung 16 oder direkt auf den Zähler-Sender 18 einwirkenden reduzierten Sendetakt 27 diese Anzahl an Datenpaketen 20 gleichmäßig auf die aktuelle Restzeitspanne der Betriebszeitspanne verteilt werden kann. Diese gegenüber dem Normalbetrieb reduzierte Taktfrequenzvorgabe wird über den Empfänger 25 des, jedenfalls dafür, bidirektional arbeitenden Funkmodules 19 an den Taktgeber 17 übermittelt.

In vergleichbarer Weise kann (in der Zeichnung nicht berücksichtigt) - stattdessen oder zusätzlich - über die Rechenschaltung 24 die Sendeleistung des Senders 18 im Zähler 11 reduziert werden, um trotz eingebrochener Batteriekapazität ohne vorzeitigen Batterie-Austausch noch über die Restzeitspanne bis zum Ende der vorgegebenen Betriebszeitspanne Datenpakete 20 an den Konzentrator 13 zu übermitteln. Für solche Übermittlung mit während der Restzeitspanne reduzierter Sendeleistung können andere originäre Sende-Parameter wie der Takt beibehalten oder, zumal bei kritischer Leistungsbilanz für die Restzeitspanne, ebenfalls reduziert werden.

Bei Batteriebetrieb eines Smartmetering-Zählers 11, der mit einem Verbrauchs-Sensor 14 und einem Sende-Taktgeber 17 für einen Funkmodul 19 zur Übermittlung von Verbrauchs-Datenpaketen 20 ausgestattet ist, wird also erfindungsgemäß bei auffallend abgesunkener Restkapazität der Batterie 21 ermittelt, ob diese Restkapazität für die vorgesehene Datenübertragung ausreicht; andernfalls die Datenpakete 20 über eine gestreckte Restzeitspanne bis zum routinemäßigen Batterietausch am Ende der vorgegebenen Betriebszeitspanne mit wenigstens einem geänderten Sende-Parameter an einen Konzentrator 13 übermittelt werden müssen. Dazu kann über die Restzeitspanne etwa die Datenrate oder der Sendepegel der Datenpakete 20 reduziert und / oder deren Sendetakt 27 verlängert werden. Diese Feststellung samt Steuerungsvorgabe für den künftigen Betrieb des Senders 18 wird in einer Zentrale. vorzugsweise aber in einem Konzentrator 13 getroffen und mittels bidirektional arbeitender Funkmodule 19 an den Zähler 11 übermittelt, um nicht in jedem der zahlreichen Zähler 11 des Versorgungsgebietes die dazu erforderlichen Rechnerkapazitäten vorhalten zu müssen.

### Bezugszeichenliste

- 11: Zähler (mit 14 und 19)
- 12: Funkverbindung (zwischen 11 und 13)
- 13: Konzentrator
- 14: Sensor (von 11)
- 15: Verbrauchsdaten (aus 14, in 20)
- 16: Signalverarbeitung (zwischen 14 und 18)
- 17: Taktgeber (für 16 / 18 in 11)
- 18: Sender (von 19)
- 19: Funkmodul (von 11 beziehungsweise von 13)
- 20: Datenpaket (von 11 nach 13)
- 21: Batterie (in 11)
- 22: Detektor (bei 21)
- 23: Vergleicher (für 26)
- 24: Rechenschaltung (für 27 aus 23)
- 25: Empfänger (von 19)
- 26: Batterieinformation (aus 22, übermittelt mit 20)
- 27: Sendetakt (von 17, für 18/20)

## Patentansprüche

1. Verfahren zum Betreiben eines, einen Verbrauchs-Sensor (14) und einen Sende-Taktgeber (17) aufweisenden und Verbrauchs-Datenpakete (20) über Funk übermittelnden, Smartmetering-Zählers (11) mittels einer Batterie (21) über eine vorgegebene Betriebszeitspanne, wobei bei nach gewisser Betriebsdauer abgesunkener Batteriekapazität in Abhängigkeit von einer Restkapazität auf Parameter der Funk-Übermittlung im Sinne einer Verlängerung der Betriebzeitspanne Einfluss genommen wird, wobei als Batterie (21) des Smartmetering-Zählers (11) eine Longlife-Batterie mit der vorgegebenen Betriebszeitspanne vorgesehen ist, **dadurch gekennzeichnet, dass** unter Berücksichtigung eines bekannten Leistungsverbrauchs die noch verfügbare restliche Betriebsdauer der Batterie (21), wenn sie vorzeitig zu erschöpfen droht, durch deren gezielte Entlastung bis wenigstens zum Ablauf der regulären Betriebszeitspanne verlängert wird, indem abhängig von der Restkapazität der Batterie im Sinne einer Verlängerung der verbliebenen Betriebszeitspanne Einfluss genommen wird auf Parameter der Funkverbindung,
und wobei die Anzahl der noch übermittelbaren Datenpakete (20) bestimmt wird und diese Anzahl während der noch verfügbaren restlichen Betriebsdauer bis zum Ende der Betriebszeitspanne modifiziert übermittelt wird.

2. Verfahren nach Anspruch 1, **dadurch gekennzeichnet, dass** als Parameter-Modifikation Sendetakt und / oder Sendeleistung der Übermittlung der Datenpakete (20) reduziert werden.

3. Verfahren nach einem der vorangehenden Ansprüche, **dadurch gekennzeichnet, dass** Informationen (26) über die Batteriekapazität aus der BatterieSpannung oder aus dem Batterie-Innenwiderstand, jeweils vorzugsweise unter Voll-Last, gewonnen werden.

4. Verfahren nach einem der vorangehenden Ansprüche, **dadurch gekennzeichnet, dass** Informationen (26) über die Batteriekapazität vom Zähler (11) über Funk an einen Konzentrator (13), und gegebenenfalls von diesem weiter an eine übergeordnete Zentrale, übermittelt werden, von wo Vorgaben für wenigstens einen zu modifizierenden Parameter der Funk-Übermittlung an den Zähler (11) zurück gesendet werden.

5. Verfahren nach einem der vorangehenden Ansprüche, **dadurch gekennzeichnet, dass** der Parameter, der für die künftige Datenpaket-Übermittlung zu reduzieren ist, der Sendetakt (27) und / oder die Sendeleistung, die Datenrate und / oder eine die Reichweite beeinflussende Wellenform ist.

6. Verfahren nach Anspruch 4, **dadurch gekennzeichnet, dass** die Informationen (26) über die Batteriekapazität mit Datenpaketen (20) oder als Anhang an Datenpakete (20) übermittelt werden.

7. Einrichtung zum Betreiben eines, einen Verbrauchs-Sensor (14) und einen Sende-Taktgeber (17) aufweisenden und Verbrauchs-Datenpakete (20) über einen Funkmodul (19) übermittelnden, Smartmetering-Zählers (11) mittels einer Longlife-Batterie (21), wobei die Einrichtung den Smartmetering-Zähler (11) umfasst und zum Ausüben wenigstens eines der Verfahren gemäß der vorangehenden Verfahrensansprüche ausgelegt ist.

8. Einrichtung nach dem vorangehenden Anspruch, **dadurch gekennzeichnet, dass** ein spannungs- oder ein impedanzerfassender Detektor (22) vorgesehen ist.

9. Einrichtung nach einem der beiden vorangehenden Ansprüche, **dadurch gekennzeichnet, dass** die Einrichtung einen Smartmetering-Zähler (11) mit einem bidirektional arbeitendem Funkmodul (19) und einem damit in Funkverbindung stehenden Konzentrator (13) umfasst, wobei der Konzentrator (13) zusätzlich zu seinem Funkmodul (19) einen Vergleicher (23) und eine Rechenschaltung (24), zur Beeinflussung wenigstens eines Sende-Parameters wie Sendetakt (27) und / oder Sendeleistung der Übermittlung von Datenpaketen (20) vom Zähler (11) an den Konzentrator (13), umfasst.

## Claims

1. Method for operating a smart metering meter (11) having a consumption sensor (14) and a transmit clock generator (17) and transmitting consumption data packets (20) via radio by means of a battery (21) over a specified operating time period, wherein, in the event of battery capacity decreased after a certain operating period, radio transmission parameters are modified in the sense of an extension of the operating time period depending on the residual capacity, wherein a long-life battery having the specified operating time period is provided as the battery (21) of the smart metering meter (11), **characterized in that**, taking account of a known power consumption, the still available residual operating period of the battery (21) threatening premature exhaustion is extended through targeted load relief thereof until at least the end of the scheduled operating time period by specifically relieving the load on it by modifying parameters of the radio link depending on the residual capacity of the battery in the sense of an extension of the residual operating time period,
and wherein the number of still transmittable data packets (20) is defined and this number is transmitted in modified form during the still available residual operating period until the end of the operating time period.

2. Method according to Claim 1, **characterized in that** the transmit clock and/or the transmit power of the transmission of the data packets (20) is/are reduced as the parameter modification.

3. Method according to one of the preceding claims, **characterized in that** information (26) relating to the battery capacity is obtained from the battery voltage or from the battery internal resistance, in each case preferably under full load.

4. Method according to one of the preceding claims, **characterized in that** information (26) relating to the battery capacity is transmitted from the meter (11) via radio to a concentrator (13), und, if necessary, on from the latter to a higher-level control centre, from which specifications for at least one radio transmission parameter to be modified are transmitted back to the meter (11).

5. Method according to one of the preceding claims, **characterized in that** the parameter which is to be reduced for the future data packet transmission is the transmit clock (27) and/or the transmit power, the data rate and/or a waveform modifying the range.

6. Method according to Claim 4, **characterized in that** the information (26) relating to the battery capacity is transmitted with data packets (20) or as an attachment to data packets (20) .

7. Device for operating a smart metering meter (11) having a consumption sensor (14) and a transmit clock generator (17) and transmitting consumption data packets (20) via a radio module (19) by means of a long-life battery (21), wherein the device comprises the smart metering meter (11) and is designed to carry out at least one of the methods according to the preceding method claims.

8. Device according to the preceding claim, **characterized in that** a voltage-measuring or an impedance-measuring detector (22) is provided.

9. Device according to one of the two preceding claims, **characterized in that** the device comprises a smart metering meter (11) with a bidirectionally operating radio module (19) and a concentrator (13) in radio contact with the latter, wherein the concentrator (13), in addition to its radio module (19), comprises a comparator (23) and a computing circuit (24) in order to modify at least one transmit parameter such as the transmit clock (27) and/or the transmit power of the transmission of data packets (20) from the meter (11) to the concentrator (13).

## Revendications

1. Procédé permettant de faire fonctionner un compteur de mesure intelligent (11) présentant un capteur de consommation (14) et une horloge d'émission (17) et transmettant des paquets de données de consommation (20) par radio, au moyen d'une batterie (21) pendant une période de fonctionnement prédéfinie, dans lequel dans le cas d'une capacité de batterie en baisse après une certaine durée de fonctionnement, en fonction d'une capacité résiduelle, des paramètres de la transmission radio sont influencés dans le sens d'un prolongement de la période de fonctionnement, dans lequel une batterie longue durée ayant la période de fonctionnement prédéfinie est prévue comme batterie (21) du compteur de mesure intelligent (11),
**caractérisé en ce qu'**en tenant compte d'une consommation de puissance connue, la durée de fonctionnement résiduelle encore disponible de la batterie (21), si elle risque d'être épuisée prématurément, est prolongée au moins jusqu'à expiration de la période de fonctionnement normale par un délestage ciblé **en ce qu'**en fonction de la capacité résiduelle de la batterie des paramètres de la liaison radio sont influencés dans le sens d'un prolongement de la période de fonctionnement restante,
et dans lequel le nombre des paquets de données (20) pouvant encore être transmis est déterminé, et ce nombre est transmis de manière modifiée pendant la durée de fonctionnement restante encore disponible jusqu'à la fin de la période de fonctionnement.

2. Procédé selon la revendication 1, **caractérisé en ce que** la cadence d'émission et/ou la puissance d'émission des paquets de données (20) sont réduites en tant que modification de paramètre.

3. Procédé selon l'une quelconque des revendications précédentes, **caractérisé en ce que** des informations (26) concernant la capacité de batterie sont obtenues à partir de la tension de batterie ou à partir de la résistance intérieure de la batterie, respectivement de préférence à plein régime.

4. Procédé selon l'une quelconque des revendications précédentes, **caractérisé en ce que** des informations (26) concernant la capacité de batterie sont transmises du compteur (11) par radio à un concentrateur (13), et sont le cas échéant retransmises de celui-ci à une centrale de niveau supérieur qui renvoie au compteur (11) des spécifications pour au moins un paramètre à modifier de la transmission radio.

5. Procédé selon l'une quelconque des revendications précédentes, **caractérisé en ce que** le paramètre qui doit être réduit pour la transmission de paquets de données future est la cadence d'émission (27) et/ou la puissance d'émission, le débit de données et/ou une forme d'onde influençant la portée.

6. Procédé selon la revendication 4, **caractérisé en ce que** les informations (26) concernant la capacité de batterie sont transmises avec des paquets de données (20) ou en annexe des paquets de données (20).

7. Dispositif permettant de faire fonctionner un compteur de mesure intelligent (11) présentant un capteur de consommation (14) et une horloge d'émission (17) et transmettant des paquets de données de consommation (20) par un module radio (19) au moyen d'une batterie longue durée (21), dans lequel le dispositif comprend le compteur de mesure intelligent (11) et est conçu pour réaliser au moins l'un des procédés selon l'une quelconque des revendications de procédé précédentes.

8. Dispositif selon la revendication précédente, **caractérisé en ce qu'**un détecteur (22) détectant la tension ou l'impédance est prévu.

9. Dispositif selon l'une des deux revendications précédentes, **caractérisé en ce que** le dispositif comprend un compteur de mesure intelligent (11) pourvu d'un module radio (19) à fonctionnement bidirectionnel et d'un concentrateur (13) en liaison radio avec celui-ci,
dans lequel le concentrateur (13) comprend en plus de son module radio (19) un comparateur (23) et un circuit arithmétique (24) pour influencer au moins un paramètre d'émission, tel que la cadence d'émission (27) et/ou la puissance d'émission de la transmission de paquets de données (20) du compteur (11) au concentrateur (13).
